Europäisches Patentamt

European Patent Office

Office européen des brevets

(11) Veröffentlichungsnummer: **0 219 686**
A1

# (12) EUROPÄISCHE PATENTANMELDUNG

(21) Anmeldenummer: 86112773.6

(22) Anmeldetag: 16.09.86

(51) Int. Cl.⁴: **F 23 K 3/12**
F 23 C 11/02, B 01 J 4/00

(30) Priorität: 26.09.85 DE 3534302

(43) Veröffentlichungstag der Anmeldung:
29.04.87 Patentblatt 87/18

(84) Benannte Vertragsstaaten:
BE CH DE FR LI NL

(71) Anmelder: Thyssen Industrie AG
Am Thyssenhaus 1
D-4300 Essen 1(DE)

(72) Erfinder: Albrecht, Erhard
Linneperweg 26
D-4030 Ratingen 5(DE)

(74) Vertreter: Eberhard, Friedrich, Dr. et al,
Am Thyssenhaus 1
D-4300 Essen 1(DE)

(54) Aufgabevorrichtung zum Beschicken eines Wirbelbettes mit Brenn- oder Reaktionsmaterial.

(57) Damit insbesondere lockerliegende, körnige oder stückige Brennstoffe ohne Gefahr von Rückzündungen unten in das Wirbelbett (3) eingebracht werden können, soll über dem Boden (7) des Bunkers oder Aufgabeschachtes (6) ein Sammelkanal (8) münden, wobei ein in Richtung auf den Sammelkanal (8) über den Boden (7) schiebender Sammelschieber (9) vorgesehen ist, der in seiner hinteren Endstellung den Sammelkanal (8) freigibt und in der vorderen Endstellung den Sammelkanal (8) verschließt.

Ein in Richtung auf den Aufgabekanal (5) beweglicher Aufgabeschieber (13) ist vorgesehen, der in seiner hinteren Endstellung den Sammelkanal (8) freigibt, bei seinem Vorwärtshub das im Sammelkanal (8) befindliche Material durch den Aufgabekanal (5) in das Wirbelbett (3) drückt und in seiner vorderen Endstellung den Aufgabekanal (5) verschließt.

Fig.1

EP 0 219 686 A1

**0219686**

## Aufgabevorrichtung zum Beschicken eines Wirbelbettes mit Brenn- oder Reaktionsmaterial

Die Erfindung betrifft eine Aufgabevorrichtung zum Beschikken eines Wirbelbettes mit Brenn- oder Reaktionsmaterial aus einem Bunker oder Aufgabeschacht über einen in den unteren Bereich des Wirbelbettes mündenden Aufgabekanal.

Es ist bekannt, daß die Effektivität von Wirbelschichtfeuerungen wesentlich verbessert wird, wenn die Brennstoffe bzw. Reagentien, z.B. Kalkstein, in den unteren Bereich des Wirbelbettes eingeführt werden, so daß sie zwangsläufig die gesamte Wirbelschicht durchstoßen müssen, bevor sie als feinkörnige Asche mit dem aufsteigenden Gasstrom ausgetragen werden. Die dadurch wesentlich verlängerte Reaktionszeit unter optimalen Reaktionsbedingungen in der Wirbelschicht erhöht die Ausbrandquote und die Schadstoffeinbindung.

Weil jedoch im unteren Bereich des Wirbelbettes ein Überdruck besteht, der durch den luft- bzw. gasseitigen Widerstand der Wirbelschicht verursacht wird und dem durch die Blasenbildung erhebliche Pulsationen überlagert sind, besteht die Gefahr des Zurückströmens heißer Gase und eventuell sogar heißer Wirbelmasse durch die Aufgabevorrichtung und damit die Gefahr des Rückzündens bis in den Brennstoffbunker.

Flüssige und pastöse Brennstoffe werden in üblicher Weise mit Exzenter- oder Kolbenpumpen direkt in das Wirbelbett gedrückt. Das fließfähige Material füllt die Zufuhrleitung bzw. den Aufgabekanal aus und verhindert den Sauerstoffzutritt sowie damit eine Rückzündung.

Grobkörnige, stückige und vor allem lockerliegende Brennstoffe mit großem Hohlraumvolumen, z.B. Müll, können dagegen von Luft und heißen Gasen aus dem Wirbelbett durchströmt werden sowie dabei zünden. Deshalb hat man grobkörnige und
stückige Brennstoffe dadurch in das Wirbelbett eingebracht,
daß man sie von oben aufgestreut hat oder durch kontinuierlich arbeitende Schnecken in den unteren Bereich des Wirbelbettes eingetragen hat. Da Schnecken wegen ihres begrenzten
Füllungsgrades keine zuverlässige Abdichtung ermöglichen,
werden sie meist mit Zellenrad-, Klappen- oder Schieberschleusen kombiniert. Auch dann kann aber die Forderung nach
absoluter Dichtigkeit einerseits und verstopfungssicherem
Arbeiten andererseits meist nicht erfüllt werden.

Aufgabe der Erfindung ist es, eine Aufgabevorrichtung der
eingangs beschriebenen Gattung anzugeben, mit der insbesondere lockerliegende, körnige oder stückige Brennstoffe ohne
Gefahr von Rückzündungen unten in ein Wirbelbett eingebracht
werden können.

Diese Aufgabe wird dadurch gelöst, daß über dem Boden des
Bunkers oder Aufgabeschachtes ein Sammelkanal mündet, daß
ein in Richtung auf den Sammelkanal über den Boden schiebender Sammelschieber vorgesehen ist, der in der vorderen Endstellung den Sammelkanal verschließt und in seiner
hinteren Endstellung freigibt, daß der Aufgabekanal in den
Sammelkanal mündet und daß im Sammelkanal ein in Richtung
auf den Aufgabekanal beweglicher Aufgabeschieber vorgesehen
ist, der in seiner hinteren Endstellung den Sammelkanal
freigibt, bei seinem Vorwärtshub das im Sammelkanal befindliche Material durch den Aufgabekanal in das Wirbelbett
drückt und in seiner vorderen Endstellung den Aufgabekanal
verschließt.

Bei dieser Aufgabevorrichtung arbeiten der Sammelschieber
und der Aufgabeschieber wechselweise, so daß zumindest einer der Kanäle, entweder der Sammelkanal oder der Aufgabekanal oder beide, geschlossen sind. Damit übernimmt die
Aufgabevorrichtung auch die Funktion einer Schleuse, weil
der Aufgabekanal durch seinen Aufgabeschieber solange geschlossen ist, bis der Sammelschieber den Sammelraum mit

Bunkermaterial gefüllt und den Sammelraum geschlossen hat. Anschließend bewegt sich der Aufgabeschieber durch den Sammelraum in seine hintere Endstellung, bevor er das vom Sammelschieber nunmehr weitertransportierte Material erfaßt und durch den Aufgabekanal in das Wirbelbett drückt. Die Aufgabevorrichtung ermöglicht folglich nicht nur eine rückströmungs- und rückzündungssichere Materialzuführung in den unteren Bereich des Wirbelbettes, sondern auch ein verstopfungssicheres Arbeiten selbst bei haftenden, klebrigen, verfilzten und inhomogenen Materialien. Die Aufgabe des Materials kann durch Änderung der Hubintervalle und gegebenenfalls auch der Hublängen geregelt werden.

Um eine möglichst vollständige Entleerung des Bunkers bzw. des Aufgabeschachtes zu erreichen und Toträume darin zu vermeiden, sollten der Sammelkanal und der Sammelschieber sich im wesentlichen über die ganze Breite des Bunkers oder des Aufgabeschachtes erstrecken. Eine bevorzugte Ausführung ist dadurch gekennzeichnet, daß der Sammelkanal und der Aufgabekanal im wesentlichen horizontal angeordnet sind.

Beim Betrieb dieser Aufgabevorrichtung werden die Materialien, die vom Sammelschieber erfaßt und in den Sammelraum gedrückt werden, zwangsläufig auch mehr oder weniger verdichtet. Die Verdichtung kann aber insbesondere bei Brennstoffen mit großem Hohlraumvolumen, z.B. Müll, auch dadurch gesteuert oder eingestellt werden, daß die Abmessung des Sammelkanals in Hubrichtung des Sammelschiebers kleiner ist als die entsprechende Abmessung des Bodens. Zusätzlich kann die Verdichtung durch unterschiedlich großen Hub des Sammelschiebers gesteuert bzw. eingestellt werden. Dazu ist der Sammelschieber in seiner vorderen Endstellung in den Sammelkanal eingefahren, - wobei auch die Dichtung in diesem Bereich verbessert wird.

Eine bevorzugte Ausführung der Erfindung ist dadurch gekennzeichnet, daß die der freien Stirnseite des Sammelschiebers gegenüberliegende Wandung des Sammelkanals mit der entsprechenden Wandung des Aufgabekanals fluchtet und daß die freie Stirnseite des Sammelschiebers in vorderer Endstellung mit den nicht vom Sammelschieber abgedeckten Wandungen bzw. Wandungsabschnitten des Sammelkanals eine Verlängerung des Aufgabekanals bildet, die der Aufgabeschieber passiert. Hier arbeitet der Aufgabeschieber, jedenfalls wenn er sich in Richtung auf die Mündung des Aufgabekanals bewegt, in einem durchgehenden Kanal. Er kann deswegen das in diesem Kanal befindliche Material verstopfungssicher in den unteren Bereich des Wirbelbettes pressen.

Zur sicheren Förderung stark verfilzter, inhomogener und gröbstückig durchsetzter Brennstoffe, z.B. Müll, können die stirnseitigen Kanten der Schieber und gegebenenfalls zugeordnete Gegenkanten der Kanäle als Schneid- oder Reißkanten ausgeführt sowie von auswechselbaren Leisten aus verschleißfestem Material gebildet sein.

Ferner besteht die Möglichkeit, im Aufgabekanal zwischen Wirbelbett und der vorderen Endstellung des Aufgabeschiebers einen Absperrschieber anzuordnen, der so im Takt mit den beiden anderen Schiebern arbeitet, daß jederzeit wenigstens einer der drei Schieber geschlossen sind. Dieser Absperrschieber kann auch als Notabsperrung eingesetzt werden, wenn z.B. Reparaturen an der schleusenartigen Aufgabevorrichtung während des Betriebes des Wirbelbettes durchgeführt werden sollen.

Mit Rücksicht auf die hohen Temperaturen im Wirbelbett kann der Aufgabekanal wenigstens im Bereich zwischen Wirbelbett und Absperrschieber gekühlt sein. Dazu kann der Aufgabekanal als Doppelrohr ausgeführt sein, in dessen Ringraum das Kühlmedium fließt.

Im folgenden wird ein in der Zeichnung dargestelltes Ausführungsbeispiel der Erfindung erläutert; es zeigen:

Fig. 1  schematisch einen Schnitt durch den unteren Bereich eines Wirbelbettes mit angeschlossener Aufgabevorrichtung,

Fig. 2  einen Schnitt in Richtung II - II durch den Gegenstand nach Figur 1.

In einem Wirbelbettschacht 1 wird durch Luftzuführung 2 von unten ein Wirbelbett 3 aufrechterhalten, in welchem grobkörnige, stückige und vor allem lockerliegende Brennstoffe mit großem Hohlraumvolumen, z.B. Müll, verbrannt werden sollen. Die Brennstoffe werden mit einer Aufgabevorrichtung 4 über einen Aufgabekanal 5, der in den unteren Bereich des Wirbelbettes 1 mündet, in dieses eingetragen. Der Aufgabekanal 5 hat bei der dargestellten Ausführung einen kreisförmigen Querschnitt.

Zur Aufgabevorrichtung 4 gehört ein Bunker oder ein Aufgabeschacht 6, in den unmittelbar über seinem Boden 7 ein Sammelkanal 8 mündet. Der Sammelkanal 8 besitzt bei der dargestellten Ausführung einen rechteckigen Querschnitt und erstreckt sich über die gesamte Breite B des Aufgabeschachtes 6.

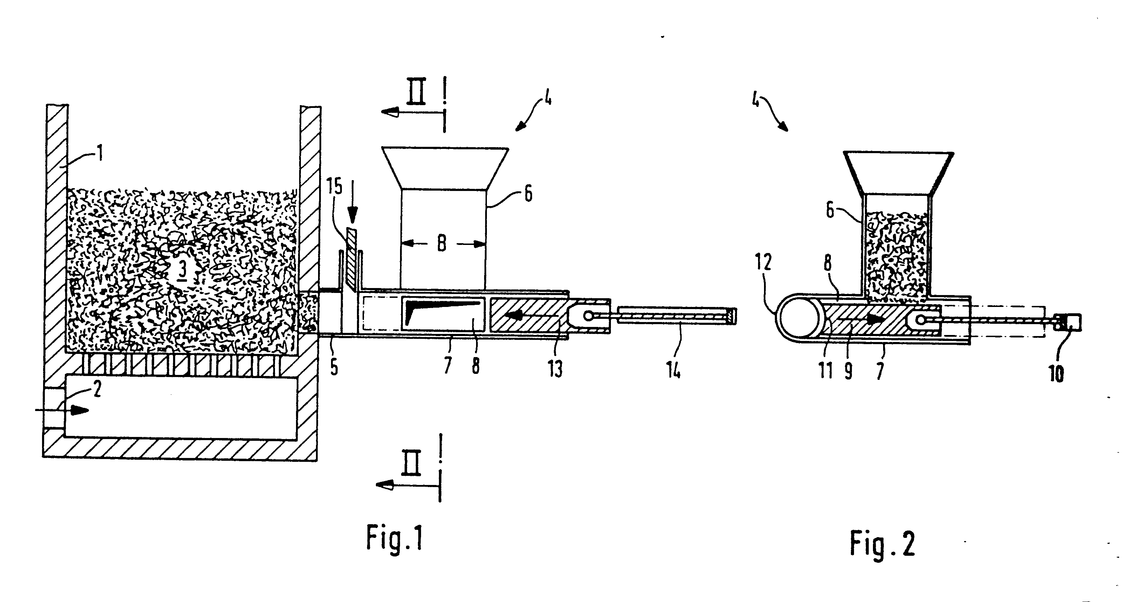

Zur Aufgabevorrichtung 4 gehört ferner ein Sammelschieber 9 mit zugeordnetem Antrieb 10. Der Sammelschieber bewegt sich, wie insbesondere aus Figur 2 ersichtlich, über den Boden 7 des Aufgabeschachtes 6 zwischen zwei Endstellungen. In der mit strichpunktierten Linien angedeuteten hinteren Endstellung gibt der Sammelschieber 9 den Sammelkanal 8 völlig frei. In der vorderen, mit ausgezogenen Linien dargestellten Endstellung ist der Sammelschieber 9 in den Sammelkanal 8 eingefahren und verschließt diesen.

An das der vorderen Endstellung des Sammelschiebers 9 zugeordnete Ende des Sammelkanals 8 schließt orthogonal der Aufgabekanal 5 an. Aufgabekanal 5 und Sammelkanal 8 erstrecken sich in einer horizontalen Ebene.

0219686

Die der freien Stirnseite 11 des Sammelschiebers 9 gegenüberliegende Wandung 12 des Sammelkanals 8 fluchtet mit
der entsprechenden Wandung des Aufgabekanals 5, ist also
halbkreisförmig ausgebildet. Die freie Stirnseite 11 des
Sammelschiebers 9 besitzt eine Kontur, die in vorderer Endstellung des Sammelschiebers 9 den Kreisquerschnitt des
Aufgabekanals 5 vervollständigt, so daß bei vorgefahrenem
Sammelschieber 9 eine Verlängerung des Aufgabekanals 5 innerhalb des Sammelkanals 8 gebildet ist.

Zur Aufgabevorrichtung 4 gehört ferner ein Aufgabeschieber
13, der bei der dargestellten Ausführung einen Kreisquerschnitt besitzt. Dieser Aufgabeschieber 13 besitzt einen
zugeordneten Antrieb 14. Der Aufgabeschieber 13 ist in der
Flucht des Aufgabekanals 5 im Sammelkanal 8 verschieblich,
und zwar zwischen einer hinteren Endstellung, die in Figur 1
mit durchgezogenen Linien wiedergegeben ist und in der er
den Sammelkanal 8 völlig freigibt, und einer vorderen, in
Figur 1 mit strichpunktierten Linien wiedergegebenen Endstellung, bei der er in den Aufgabekanal 5 eingefahren ist
und diesen verschließt. Wie man aus Figur 1 entnimmt, besitzt der Aufgabeschieber 13 eine Länge, die größer ist als
die Breite B des Sammelkanals 8, so daß er auch in vorderer
Endstellung den Sammelkanal 8 abdeckt bzw. verschließt.
Entsprechend besitzt auch der Sammelschieber 9 eine Länge,
die größer ist als die entsprechende Abmessung des Aufgabeschachtes 6, so daß bei in vorderer Endstellung befindlichem
Sammelschieber das im Aufgabeschacht 6 befindliche Material
auf der Oberseite des Sammelschiebers 9 aufliegt und nicht
hinter den Sammelschieber fallen kann.

Im Aufgabekanal 5 ist zwischen dem Wirbelbettschacht 1 und
der vorderen Endstellung des Aufgabeschiebers 13 ein Absperrschieber 15 angeordnet. Nicht dargestellt ist, daß der
Aufgabekanal 5 zumindest bereichsweise, vorzugsweise zwischen dem Wirbelbettschacht 1 und dem Absperrschieber 15,
gekühlt ist. In diesem Bereich ist der Aufgabekanal 5 als
Doppelrohr ausgebildet, dessen Ringraum von einem Kühlmedium
durchströmt wird.

Die dargestellte Aufgabevorrichtung arbeitet wie folgt. Wenn der Sammelschieber 9 aus der in Figur 2 dargestellten vorderen Endstellung in die mit strichpunktierten Linien dargestellte hintere Endstellung zurückgezogen wird, fällt der Brennstoff aus dem Aufgabeschacht 6 auf dessen Boden 7. Beim anschließenden Hub des Sammelschiebers 9 in Richtung auf seine vordere Endstellung werden die auf dem Boden liegenden Brennstoffe mitgenommen und in den Sammelraum 8 gebracht sowie dort nach Maßgabe des Hubes des Sammelschiebers 9 mehr oder weniger verdichtet. Während dieses Verdichtungshubes des Sammelschiebers 9 befindet sich der Aufgabeschieber 13 in seiner in Figur 1 mit strichpunktieren Linien dargestellten vorderen Endstellung, in der er sich auch über die gesamte Breite des Sammelkanals 8 erstreckt.

Wenn der Sammelschieber 9 in den Sammelkanal 8 eingefahren ist und diesen verschlossen hat, wird der Aufgabeschieber 13 in seine hintere, in Figur 1 mit durchgezogenen Linien wiedergegebene Endstellung zurückgezogen, so daß der Sammelschieber 9 bis in die in Figur 2 wiedergegebene vordere Endstellung vorfahren kann, gegebenenfalls unter weiterer Verdichtung der mitgenommenen Brennstoffe. Hat der Sammelschieber 9 seine vordere Endstellung erreicht, bei der seine freie Stirnseite 11 zusammen mit der Wandung 12 eine Verlängerung des Aufgabekanals 5 bildet, dann wird der Aufgabeschieber 13 in seine vordere Endstellung bewegt, wobei er die in der Verlängerung befindlichen Brennstoffe durch den Aufgabekanal 5 in das Wirbelbett 3 drückt. In vorderer Endstellung ist der Aufgabeschieber 13 in den Aufgabekanal 5 eingefahren und dichtet diesen ab. Zusätzlich kann nunmehr der Absperrschieber 15 geschlossen werden, so daß der Aufgabekanal 5 zusätzlich abgedichtet ist. Anschließend beginnt wieder der Rückhub des Sammelschiebers 9.

0219686

Essen, den 15.09.1986
PZ 3397

Bezugszeichenliste

 1  Wirbelbettschacht
 2  Luftzuführung
 3  Wirbelbett
 4  Aufgabevorrichtung
 5  Aufgabekanal
 6  Aufgabeschacht
 7  Boden
 8  Sammelkanal
 9  Sammelschieber
10  Antrieb
11  Stirnseite
12  Wandung
13  Aufgabeschieber
14  Antrieb
15  Absperrschieber

PATENTANWALT DIPL.-PHYS. DR.-ING. FRIEDRICH EBERHARD 0219686
4300 ESSEN, AM THYSSENHAUS 1, POSTFACH 10 37 45, TEL. (02 01) 1 06 32 54

- Vertreter beim Europäischen Patentamt - EUROPEAN PATENT ATTORNEY -

┐

┘

| Ihr Zeichen | Mein Zeichen | Datum |
|---|---|---|
| | PZ 3397 | 15.09.1986 |

Betreff     Thyssen Industrie AG, Am Thyssenhaus 1, 4300 Essen 1

## A n s p r ü c h e

1. Aufgabevorrichtung zum Beschicken eines Wirbelbettes (3) mit Brenn- oder Reaktionsmaterial aus einem Bunker oder Aufgabeschacht (6) über einen in den unteren Bereich des Wirbelbettes (3) mündenden Aufgabekanal (5), dadurch gekennzeichnet, daß über dem Boden (7) des Bunkers oder Aufgabeschachtes (6) ein Sammelkanal (8) mündet, daß ein in Richtung auf den Sammelkanal (8) über den Boden (7) schiebender Sammelschieber (9) vorgesehen ist, der in der vorderen Endstellung den Sammelkanal (8) verschließt und in seiner hinteren Endstellung freigibt, daß der Aufgabekanal (5) in den Sammelkanal (8) mündet und daß im Sammelkanal (8) ein in Richtung auf den Aufgabekanal (5) beweglicher Aufgabeschieber (13) vorgesehen ist, der in seiner hinteren Endstellung den Sammelkanal (8) freigibt, bei seinem Vorwärtshub das im Sammelkanal (8) befindliche Material durch den Aufgabekanal (5) in das Wirbelbett (3) drückt und in seiner vorderen Endstellung den Aufgabekanal (5) verschließt.

2. Vorrichtung nach Anspruch 1, dadurch gekennzeichnet, daß der Sammelkanal (8) und der Sammelschieber (9) sich im wesentlichen über die ganze Breite (B) des Bunkers oder des Aufgabeschachtes (6) erstrecken.

3. Vorrichtung nach Anspruch 1 oder 2, dadurch gekennzeichnet, daß der Sammelkanal (8) und der Aufgabekanal (5) im wesentlichen horizontal angeordnet sind.

4. Vorrichtung nach einem der Ansprüche 1 - 3, dadurch gekennzeichnet, daß die Abmessung des Sammelkanals (8) in Hubrichtung des Sammelschiebers (9) kleiner ist als die entsprechende Abmessung des Bodens (7).

5. Vorrichtung nach einem der Ansprüche 1 - 4, dadurch gekennzeichnet, daß der Sammelschieber (9) in seiner vorderen Endstellung in den Sammelkanal (8) eingefahren ist.

6. Vorrichtung nach einem der Ansprüche 1 - 5, dadurch gekennzeichnet, daß die der freien Stirnseite (11) des Sammelschiebers (9) gegenüberliegende Wandung (12) des Sammelkanals (8) mit der entsprechenden Wandung des Aufgabekanals (5) fluchtet und daß die freie Stirnseite (11) des Sammelschiebers (9) in vorderer Endstellung mit den nicht vom Sammelschieber (9) abgedeckten Wandungen bzw. Wandungsabschnitten des Sammelkanals (8) eine Verlängerung des Aufgabekanals (5) bildet, die der Aufgabeschieber (13) passiert.

7. Vorrichtung nach einem der Ansprüche 1 - 6, dadurch gekennzeichnet, daß der Aufgabeschieber (13) in seiner vorderen Endstellung in den Aufgabekanal (5) eingefahren ist.

8. Vorrichtung nach einem der Ansprüche 1 - 7, dadurch gekennzeichnet, daß die stirnseitigen Kanten der Schieber (9, 13) und gegebenenfalls zugeordnete Gegenkanten der Kanäle (8, 5) als Schneid- oder Reißkanten ausgeführt sowie von auswechselbaren Leisten aus verschleißfestem Material gebildet sind.

0219686

9. Vorrichtung nach einem der Ansprüche 1 - 8, dadurch gekennzeichnet, daß im Aufgabekanal (5) zwischen dem Wirbelbett (3) und der vorderen Endstellung des Aufgabeschiebers (13) ein Absperrschieber (15) angeordnet ist.

10. Vorrichtung nach einem der Ansprüche 1 - 9, dadurch gekennzeichnet, daß der Aufgabekanal (5) wenigstens im Bereich zwischen Wirbelbett (3) und Absperrschieber (15) gekühlt ist.

Fig.1

Fig.2

0219686

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 560 367 (GHELFI) * Spalte 1, Zeilen 14-24,50-67; Spalte 2, Zeilen 3-21,65-68; Spalte 3, Zeile 1 - Spalte 4, Zeile 14; Figuren 2-9 * | 1-7 | F 23 K 3/12 F 23 C 11/02 B 01 J 4/00 |
| Y | | 8,9,10 | |
| | --- | | |
| Y | DE-A-3 120 339 (IMBERT ENERGIETECHNIK) * Patentanspruch 1; Figur 2 * | 8 | |
| | --- | | |
| Y | DE-A-2 909 170 (MATTHYS) * Seite 6, letzter Absatz; Seite 8, Absatz 2; Figur 3 * | 9,10 | |
| | --- | | |
| A | GB-A-2 072 623 (TERMPLANT) | | RECHERCHIERTE SACHGEBIETE (Int Cl 4) |
| | --- | | F 23 K |
| A | GB-A-2 041 777 (COAL INDUSTRY) | | F 23 C F 23 G B 01 J C 10 J |
| | --- | | |
| A | DE-A-3 347 023 (HÖLTER) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 19-12-1986 | PHOA Y.E. |